# EUROPEAN PATENT APPLICATION

(11) **EP 2 559 591 A1**
(43) Date of publication of application: **20.02.2013**
(21) Application number: 10849753.8
(22) Date of filing: 11.06.2010
(51) Int. Cl.: B60N 2/56, B60N 2/58, H05B 3/34, B32B 3/08, B32B 3/10, B32B 7/08

(54) **SEAT COVER HEATING SYSTEM**

(30) Priority: 16.04.2010 ES 201030551
(71) Applicant: Centro Tecnológico De Grupo Copo, S.L.U., 36416 Puxeiros (MOS) Pontevedra (ES)
(72) Inventor: TOMÀS TAPIA, José Maria, E-36416 Puxeiros (MOS) Pontevedra (ES)
(74) Representative: Carvajal y Urquijo, Isabel
(86) International application number: PCT/ES2010/070391
(87) International publication number: WO 2011/128469

(57) **Abstract**

The invention relates to a seat cover heating system, based on joining a layer of heating material (2) to the textile material of a seat cover (1) using a rolling process, preferably intended for motor vehicle seats, said two components (the heating material layer and the textile cover) forming a single unit. Once the forementioned unit has been cut to the shaped required for the area to be heated, electrical connectors (6) are incorporated during the process comprising the sewing of the remaining constituent parts of the textile cover (1) so that the area to be heated functions correctly.

## Description

### Object of the Invention

As expressed in the title of this specification, the present invention relates to as heating system for a vehicle seat where the novelty essentially consists of incorporating a layer of heating material to the material of the textile cover during the process of manufacturing the material, the two constituting a joint single layer.

The object of the invention is to therefore achieve optimal heat distribution on the area of a seat to be heated as well as to eliminate the risk of possible breaks of the conductor wires constituting the electric heating resistors in conventional systems.

### Background of the Invention

Heating seats for motor vehicle seats are formed by resistors or conductor wires which are joined and maintained by a support (which can be a wadding or a non-woven material), and lay out a path to homogenize the surface to be heated such that said resistors or conductor wires together with the support can be adhered (sewn, glued, etc.) to the textile seat cover after being sewn and produced and before assembling them on the seat part.

Another known system is to assemble the heating resistors joined to a support on the seat part by means of gluing and to later cover the seat part and the resistor with the textile cover.

A system whereby the resistors or conductor wires are integrated in the foam part without requiring a material support, being included within the process for manufacturing the foam part to obtain a foam part with built-in resistors, is also known.

The current application of conductor wires as resistors for heating seats has a series of problems and drawbacks, among which the following can be mentioned:
Since they are metal wires, they cannot always adapt to the required shapes of the seat, so said, wires may break due to the stress of the material, subsequently rendering them useless for the purpose for which they were assembled.
- Due to the conductor wire configuration, the temperature-regulating field as well as the homogeneity and distribution of the heat function, it is subject to the configuration of the path of the conductor wires, so a homogenous distribution is hard to achieve.

The use of textile layers with built-in resistors or with conductor wires in part of their yarn, is well-known in the current state of the art either for manufacturing clothes, covers, temperature-regulated blankets or temperature-regulated cushions, as described in Invention Patent DE202006003995A1 for example.

On the other hand, Invention Patent DE102006017732A1 describes a temperature-regulated motor vehicle seat by means of including a conductive textile material between the foam of the seat and the cover, such that this conductive textile material can have functions of recognizing when the seat is occupied, piezoelectric functions, and even optical functions, such as the inclusion of LEDs.

As described in said German patent, the part formed by the conductive textile layer is an individual part that must be dimensional coupled to the shape of the seat, further noting that it also requires an assembly step either by sewing it or gluing it to the seat cover.

### Description of the Invention

Based on the current state of the art, the object of the present invention is to prevent the problems and drawbacks discussed in the preceding section based on ,a series of particularities and innovations that are simple and also structurally simple but fully effective in terms of function and purpose.

In such sense, the system of the invention consists of incorporating a layer of heating textile material to the textile material of the seat cover during a rolling or foaming process with a thin layer of foam, a conventional operation in the current manufacturing process. A single rolled textile layer formed by an outer material for the seat cover, a thin layer of foam (foaming) and a heating textile material is thereby obtained.

Following the current process, patterns that will configure the different areas of the seat cover are cut from the material supplied in rolls, cutting or punching the area of the roll to be heated configured by the layer of heating material, as described in the manufacture in the preceding section.

Continuing with the actual process, the different areas that will form the seat cover are sewn together.

When working with heated material, conductive strips that will power the heating material are joined laterally to the pattern of heated material, joining by means of sewing to the remaining the areas of non-heated material, thereby obtaining the entire cover envisaged.

By means of said system, the layer of heating material becomes an integral component of the textile cover and not an add-on placed by means of gluing, sewing or another process, as is conventionally the case.

Furthermore, as it is a textile in which the plaited wire forms an electric resistor, by joining the layer of heating material to the textile cover, the assembly (heating material, layer, of foam and textile cover) can be adapted to contours or shapes of any type no matter how complex they are.

Likewise, based on the system of the invention, the homogenous distribution of heat is assured because the heating layer has the same dimensions as the area to be heated, and because joining to the textile seat cover is assured in this entire area as it is another component of same.

On the other hand and due to the composition and features of the heating material which in one embodiment is formed by 100% conductor wire with a thin polyester covering, it is impossible for it to lose its functionality because the non-breaking thereof or a power interruption is assured since the configuration of the textile material (knitted) prevents it.

Finally, it must be indicated that the assembly formed by the textile cover and the layer of heating material form a completely homogenous surface to be heated, with the subsequent power consumption saving to heat the same surface to a specific temperature.

Other advantages of the invention relate to the possibility of controlling the heating power as well as the time necessary for reaching a desired temperature of the textile by handling several parameters when manufacturing the seat, such as: material used in forming the conductor wire, thickness of the latter, percentage of conductor wire included in the layer of heating material and finally the shape or area heated.

### Brief Description of the Drawings

To complete the description made below and for the purpose of aiding to better understand the features of the invention, a set of drawings based on which the innovations and advantages of the system object of the invention will be more readily understood is attached to the present specification.
Figure 1 shows a schematic detail corresponding to the rolling process for rolling heating material on the textile cover according to the seat cover heating system object of the invention.
Figure 2 shows a schematic detail corresponding to another possible way of performing the rolling process for rolling heating material on the textile cover according to the object of the invention.
Figure 3 shows a schematic detail corresponding to the incorporation of the electrical connectors of the heating material, after the process of sewing the latter to the rest of the textile cover.
Figure 4 shows a schematic plan detail of the arrangement of the connectors (positive and negative) following the perimeter of the area to be heated established in a motor vehicle seat cover.

### Description of the Preferred Embodiment

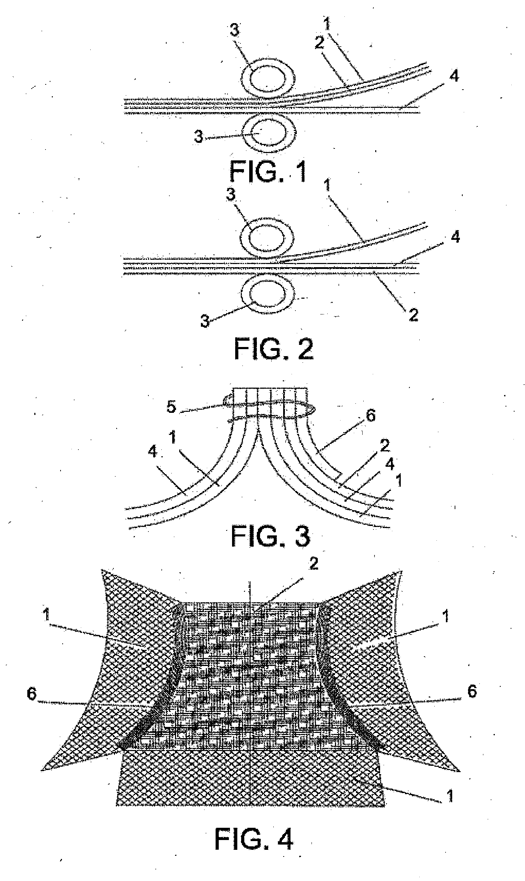

As can be seen in the mentioned drawings, the system of the invention is based on incorporating a layer of heating material 2 during the process of manufacturing a textile 1 intended as a motor vehicle seat cover, incorporated by means of rolling, as can be seen more deary in Figures 1 and 2, in which rolling rollers 3 and a layer of foam 4 (foaming) are included.

After said process of incorporating the layer of heating textile material 2 and punching the required area to be heated, the corresponding sewing 5 is performed (Figure 3) for joining the latter to the rest of the textile cover 1, in which sewing process electrical connectors 6 are incorporated in correspondence with perimetral areas of the area to be heated, as can be seen more dearly in Figure 4.

It is therefore based on several independent layers which form a joint single layer with thermal properties when joined together, this joint single layer being formed by means of the rolling process, while at the same time at least one of those independent layers established by the layer of heating material 2 comprises a conductive material.

The laminate of the several independent layers are joined together to form the joint single layer by means of a method selected from foaming and an adhesive material, where one of the independent layers is the layer of heating material 2 incorporating the conductor wires formed by a conductive metal core with an insulating cover, said conductor wires constituting the conductive material per se.

Said conductor wires have a diameter ranging between 0.0015 and 0.005 mm. These same conductor wires can comprise all the material used in the composition of the layer of heating material or comprise a percentage of the composition of the material of said layer of heating material 2.

The textile 1 of the cover can in turn also be manufactured by means of leather, PVC, TEP, etc.

It should also be pointed out that the layer of polyurethane foam 4 comprises a thickness between 0.5 and 7 mm, while at the same time it is foamed against another one of the independent layers, either against the one including the conductive material or against another one of the outer layers.

## Claims

1. A seat cover heating system, **characterized in that** it is based on several independent layers joined together forming a joint single layer with thermal properties, this joint single layer being formed by means of a rolling process, while at the same time at least one of those independent layers comprises a conductive material.

2. The seat cover heating system according to claim 1, **characterized in that** the laminate of the several independent layers are joined together to form the joint single layer by means of a method selected from foaming and an adhesive material, wherein one of the independent layers is a layer of heating material (2) incorporating conductor wires formed by a conductive metal core with an insulating cover, said conductor wires constituting the conductive material.

3. The seat cover heating system according to claim 2, **characterized in that** the conductor wires of the layer of heating material (2) have a diameter ranging between 0.0015 and 0.005 mm.

4. The seat cover heating system according to any one of claims 2 or 3, **characterized in that** the conductor wires of the layer of heating material (2) comprise all the material used in the composition of the material of that layer of heating material (2).

5. The seat cover heating system according to any one of claims 2 or 3, **characterized in that** the conductor wires of the layer of heating material (2) comprise a percentage of the composition of said layer of heating material (2).

6. The seat cover heating system according to any one of the preceding claims, **characterized in that** one of the independent layers is located on the outside and comprises a material selected from textile material, TEP, leather or PVC.

7. The seat cover heating system according to any one of the preceding claims, **characterized in that** one of the independent layers is of polyurethane foam with a thickness between 0.5 and 7 mm, and foamed against another independent layer selected from an outer layer and a layer incorporating the conductive material.

8. The seat cover heating system according to claims 1 and 2, **characterized in that** the conductive material of the layer of heating material (2) includes electrical connectors (6) in perimetral areas essentially incorporated during the rolling process in which the layer of heating material (2) is fixed on a textile cover (1).

9. The seat cover heating system according to claim 8, **characterized in that** - the layer of heating material (2) is fixed to the textile cover (1) by means of sewing.

10. The seat cover heating system according to claims 1 and 2, **characterized in that** the layer of heating material (2) has dimensions and a shape consistent with the area to be heated, completely adapting to it.
